# EUROPEAN PATENT APPLICATION

(11) **EP 4 700 680 A1**
(43) Date of publication of application: **25.02.2026**
(21) Application number: 24803719.4
(22) Date of filing: 09.05.2024
(51) Int. Cl.: G06Q 20/18, G06Q 20/14, G06Q 20/20, G01G 19/414, G06V 10/70, G06V 30/41, G06Q 30/06, G06K 19/06, B65G 43/08, B65G 37/00

(54) **METHOD AND APPARATUS FOR PRODUCT CHECKOUT IN UNMANNED STORE**

(30) Priority: 10.05.2023 KR 20230060269
(71) Applicant: Gaeasoft Co., Ltd., Seoul 03142 (KR)
(72) Inventor: KIM, Young Jun, Seoul 02502 (KR)
(74) Representative: BCKIP Part mbB
(86) International application number: PCT/KR2024/006205
(87) International publication number: WO 2024/232666

(57) **Abstract**

Disclosed are a method and an apparatus for product checkout in an unmanned store. The apparatus for product checkout in an unmanned store, according to an embodiment of the present invention, comprises: a transfer unit that includes a guide apparatus for guiding a user to insert a product and transfers the product; a first product recognition unit that recognizes that the product is placed on the transfer unit; a weight sensor that measures the weight of the product; a scan unit that scans a barcode and an image of the product; a processor that uses artificial intelligence learning data to identify what the product is; a second product recognition unit that recognizes that the product has arrived at a second point; a product classification unit that classifies the product on the basis of results of the identification of the product; a calculation unit that calculates a total price of the product; a display unit that provides, to the user, the total price and a list of products; and a control unit that controls operations of the transfer unit and the product classification unit.

## Description

### TECHNICAL FIELD

The present invention relates to a method and apparatus for product checkout in an unmanned store.

### BACKGROUND ART

The content described below provides only the background information related to an embodiment of the present invention, and does not constitute the prior art.

Attempts are made to reduce manpower and improve accuracy by automating the entire logistics process, such as production, shipping, transportation, unloading, packaging, storage, checkout, and the like of products. When logistics are automated, there is an effect of reducing the costs and preventing safety accidents according to reduction of manpower, and the time required for the logistics is shortened, and systematic management is possible.

In particular, when a user pays for products in a store, there is a problem in that as a worker in the store performs product checkout by scanning barcodes of products one by one using a barcode scanning device, unnecessary waiting time of customers increases due to increase in the time required for product checkout, and therefore, congestion in the store increases according thereto, and costs for managing operation of the store also increases due to hiring of employees for product checkout.

Accordingly, there is a demand for techniques that can quickly and accurately perform unmanned checkout for products that a customer desires to purchase.

### DISCLOSURE OF INVENTION

### TECHNICAL PROBLEM

An object of the present invention is to provide a product checkout method in an unmanned store.

Another object of the present invention is to perform product checkout quickly and accurately by increasing the product recognition rate through artificial intelligence learning data.

Another object of the present invention is to guide the location where a user places a product through a transfer unit having product feed guide devices installed at regular intervals.

### TECHNICAL SOLUTION

To accomplish the above object, according to one aspect of the present invention, there is provided an unmanned store product checkout apparatus comprising: a transfer unit including a guide device that guides feed of product by a user, to transfer a product to scan the product desired by a user to purchase; a first product recognition unit installed at a first point where transfer of the product begins by the transfer unit, to recognize that the product is placed on the transfer unit; a weight sensor installed at a lower one side of the transfer unit, to measure a weight of the product; a scan unit installed to be spaced apart from the transfer unit as much as a preset distance, to scan a barcode and an image of the product transferred by the transfer unit; a processor for identifying what the product is by using artificial intelligence learning data on the basis of the barcode and image of the product scanned by the scan unit and the weight of the product measured through the weight sensor; a second product recognition unit installed at a second point where scan of the product by the scan unit is terminated, to recognize that the product has arrived at the second point; a product classification unit installed at the second point, to classify the product on the basis of a result of the product identification; a calculation unit for calculating a total price of the products; a display unit for providing the user with the total price and a product list; and a control unit for controlling operations of the transfer unit and the product classification unit on the basis of a result of first product recognition performed by the first product recognition unit, a result of second product recognition performed by the second product recognition unit, and a result of product identification performed by the processor.

The guide device may be installed in the transfer unit at preset intervals to guide the user to feed products at preset intervals, the preset interval may be smaller than or equal to a scan range for scanning the barcode and image of the product through the scan unit, and the scan unit may scan the products fed through the guide device.

The scan unit may include: a barcode scanner for recognizing the barcode of the product; and an image scanner for acquiring image information by scanning the image of the product.

The processor may identify the product as a scanned product corresponding to identification information included in the barcode when the barcode is recognized, acquire a product name and a character string from the image information and identify the product as a scanned product on the basis of the image information, the product name, and the character string using artificial intelligence learning data when the barcode is not recognized, compare the weight of the product measured using the weight sensor with weight information included in product information corresponding to the scanned product, transmit a first signal indicating that the product has been normally identified to the control unit when the product is verified as a scanned product as a result of the comparison, and transmit a second signal indicating that the product has not been normally identified to the control unit when the product is not verified as a scanned product or it is verified that the product is not a scanned product as a result of the comparison.

The control unit may control the product classification unit not to operate while the product is transferred to the first area through the transfer unit when the first signal is received from the processor, and control the transfer unit to stop after recognizing that the product has arrived at the second point through the second product recognition unit and control the operation of the product classification unit to push the product to get out of the transfer unit so that the product may be classified into the second area when the second signal is received from the processor.

According to another aspect of the present invention, there is provided an unmanned store product checkout method comprising the steps of: receiving user information from a user terminal; recognizing a product placed on a transfer unit through a first product recognition unit; measuring a weight of the product using a weight sensor when the product is recognized; scanning the product transferred by the transfer unit through a scan unit; identifying the product through a processor on the basis of a result of scanning the product and the weight of the product; classifying the product into a first area or a second area according to a result of the identification; calculating a first price by adding up prices of the products through a calculation unit; and providing the first price to the user terminal.

The step of scanning the product may include the step of scanning the products placed on the transfer unit including the guide devices installed at preset intervals, for each of the guide devices, wherein the step of scanning the product may include the steps of: scanning a barcode and acquiring scanned product information corresponding to the barcode when the barcode of the product is recognized, and acquiring image information by scanning an entire image of the product when the barcode of the product is not recognized, specifying the product as an unconfirmed product when the barcode of the product is not recognized or the image information of the product is not acquired, and acquiring a product name of the product from the image information when the barcode of the product is not recognized after the step of scanning the product; and acquiring scanned product information corresponding to the product, of which the image information is acquired, on the basis of the image information and the product name using artificial intelligence learning data, wherein the artificial intelligence learning data may include data obtained by learning a size, a shape, a name, and a weight of products sold in an unmanned store.

The step of classifying the product may include the steps of: comparing weight information of a scanned product included in the scanned product information with a measured weight of the product; and transferring the product through the transfer unit to be classified into the first area when the product is verified as the scanned product as a result of the comparison.

The step of classifying the product may include the steps of: comparing weight information of a scanned product included in the scanned product information with a measured weight of the product; recognizing through the second product recognition unit whether the product has arrived at a second point where the second product recognition unit is installed, when the product is verified as a different product as a result of the comparison or when the product is an unconfirmed product; controlling the transfer unit to stop the operation when it is recognized through the second product recognition unit that the product has arrived at the second point; controlling the operation of the product classification unit to push the product to get out of the transfer unit so that the product may be classified into the second area; and providing a notification indicating that the product has been classified into the second area to the user terminal.

The step of receiving user information may include the steps of: receiving membership information of the user generated using the user information, and the product checkout method may further comprise, after the step of providing the first price, the step of accumulating purchase points corresponding to the first price in membership points included in the membership information when payment for the products is completed by the user, wherein the step of accumulating purchase points may include the step of granting additional purchase points at a preset first ratio corresponding to a ratio of the number of products purchased by the user to the number of products of which the barcode is recognized through the scan unit, and the step of providing the first price may include the step of providing the user terminal with a second price obtained by applying a preset discount rate of a second ratio, corresponding to a section where the membership points are included, to the first price.

### ADVANTAGEOUS EFFECTS

According to the present invention, a product checkout method in an unmanned store can be provided.

In addition, according to the present invention, product checkout can be performed quickly and accurately by increasing the product recognition rate through artificial intelligence learning data.

In addition, according to the present invention, the position where a user places a product may be guided through a transfer unit in which product feed guide devices are installed at regular intervals.

### BRIEF DESCRIPTION OF THE DRAWINGS

FIG. 1 and FIG. 2 are views showing the external appearance of an unmanned store product checkout apparatus according to an embodiment of the present invention.
FIG. 3 is a block diagram showing the configuration of an unmanned store product checkout apparatus according to an embodiment of the present invention.
FIG. 4 is a block diagram showing the configuration of a scan unit of an unmanned store product checkout apparatus according to an embodiment of the present invention.
FIG. 5 is a block diagram showing entities for product checkout in an unmanned store according to an embodiment of the present invention.
FIG. 6 is a flowchart illustrating an unmanned store product checkout method according to an embodiment of the present invention.
FIG. 7 is a flowchart illustrating an unmanned store product checkout method according to an embodiment of the present invention.
FIG. 8 is a flowchart illustrating an unmanned store product checkout method according to an embodiment of the present invention.
FIG. 9 is a flowchart illustrating an unmanned store product checkout method according to an embodiment of the present invention.
FIG. 10 is a flowchart illustrating an unmanned store product checkout method according to an embodiment of the present invention.

### BEST MODE FOR CARRYING OUT THE INVENTION

The present invention will be described in detail with reference to the accompanying drawings. Herein, repetitive descriptions, well-known functions, and detailed descriptions of the configurations that may unnecessarily obscure the gist of the present invention are omitted. The embodiments of the present invention are provided to explain the present invention to those skilled in the art more completely. Accordingly, the shapes and sizes of the elements in the drawings may be exaggerated for clarity.

Throughout the specification, when a part is described to "include" a component, this does not mean that it excludes other components, but that it may further include other components, unless stated otherwise.

Hereinafter, a preferred embodiment according to the present invention will be described in detail with reference to the accompanying drawings.

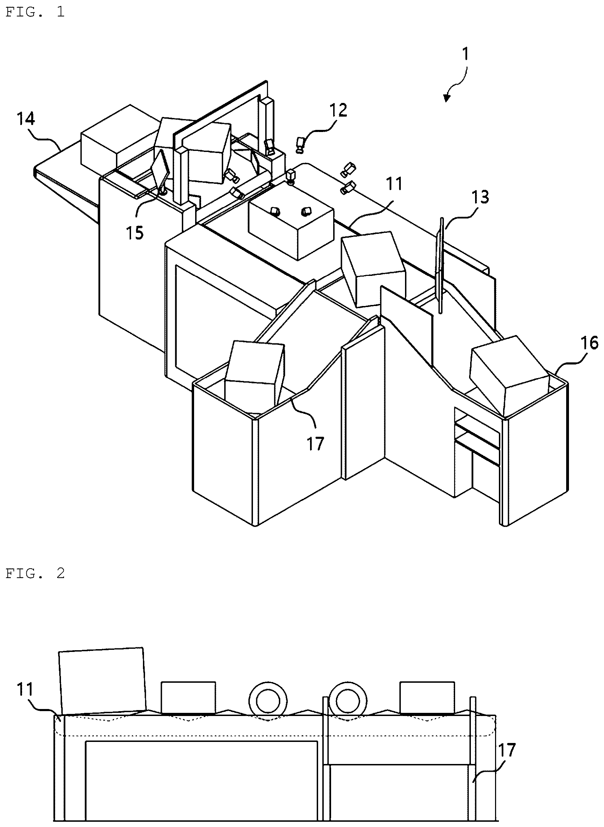

FIG. 1 and FIG. 2 are views showing the external appearance of an unmanned store product checkout apparatus according to an embodiment of the present invention.

Referring to FIGS. 1 and 2, an unmanned store product checkout apparatus 1 according to an embodiment of the present invention may include a product transfer device 11, a product scanning device 12, a checkout result display device 13, a product holder 14, a QR code recognition unit 15, a product classification device (not shown), a normal checkout product discharge unit 16, and an abnormal checkout product discharge unit 17.

The product transfer device 11 may include a conveyor belt through which products are transferred for checkout.

Here, the product transfer device 11 may include a guide device that guides feed of product by a user. At this point, the guide device may be installed to be inclined downwards so that products may be placed at preset intervals as shown in FIG. 2 to guide the user to feed products at preset intervals.

The product scanning device 12 may include a plurality of image scanners for scanning products transferred by the product transfer device 11. Here, the plurality of image scanners is arranged separately above and under the conveyor belt included in the product transfer device 11, and may image-scan products from various directions. Products that have been correctly recognized after the image scan is completed may be discharged to the normal checkout product discharge unit 16.

The product classification device (not shown) may operate to discharge the scanned product to one among the normal checkout product discharge unit 16 and the abnormal checkout product discharge unit 17. When the product is correctly recognized, the product classification device does not operate and the product may be discharged to the normal checkout product discharge unit 16 through the product transfer device 11. On the contrary, when the product is not correctly recognized, the product classification device may operate to push the product to be discharged to the abnormal checkout product discharge unit 17. The product discharged to the abnormal checkout product discharge unit may be confirmed by the user and fed into the unmanned store product checkout apparatus.

The product scanning device 12 may gradually increase the accuracy of image scanning through deep learning. As the number of image scanning of products increases, the accuracy of image scanning may increase.

The checkout result display device 13 may include a list of entire products and separately display the products discharged to the normal checkout product discharge unit 23 and the products discharged to the abnormal checkout product discharge unit 24.

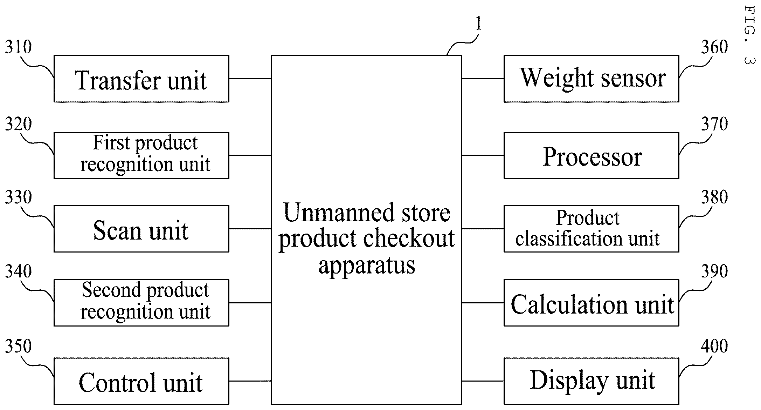

FIG. 3 is a block diagram showing the configuration of an unmanned store product checkout apparatus according to an embodiment of the present invention.

Referring to FIG. 3, the unmanned store product checkout apparatus according to an embodiment of the present invention may include a transfer unit 310, a first product recognition unit 320, a scan unit 330, a second product recognition unit 340, a control unit 350, a weight sensor 360, a processor 370, a product classification unit 380, a calculation unit 390, and a display unit 400.

The transfer unit includes a guide device that guides feed of product by a user, and may transfer a product to scan the product desired by the user to purchase.

At this time, the guide device may be installed in the transfer unit at preset intervals to guide the user to feed products at preset intervals.

Here, the preset interval may be smaller than or equal to a scan range for scanning the barcode and image of the product through the scan unit.

The first product recognition unit is installed at a first point where transfer of the product begins by the transfer unit, and may recognize that the product is placed on the transfer unit.

A weight sensor is installed at a lower one side of the transfer unit, and may measure the weight of the product.

The scan unit is installed to be spaced apart from the transfer unit as much as a preset distance, and may scan the barcode and image of the product transferred by the transfer unit.

At this point, the scan unit may scan products fed through the guide device for each guide device.

The user may place one product on the guide device, and the scan unit may scan one product by scanning a range of a preset interval.

Through this, there is an effect of improving accuracy of product scanning by preventing the products from entering the scan unit disorderly.

The processor may identify what the product is by using artificial intelligence learning data on the basis of the barcode and image of the product scanned by the scan unit and the weight of the product measured through the weight sensor.

The second product recognition unit is installed at a second point where scan of the product by the scan unit is terminated, and may recognize that the product has arrived at the second point.

The product classification unit is installed at the second point, and may classify products on the basis of the result of the product identification.

The calculation unit may calculate the total price of the products.

The display unit may provide the user with the total price calculated by the calculation unit, and a product list.

The control unit may control the operation of the transfer unit and the product classification unit on the basis of the result of first product recognition performed by the first product recognition unit, the result of second product recognition performed by the second product recognition unit, and the result of product identification performed by the processor.

Here, the transfer unit may not operate when it is recognized through the first product recognition unit that a product is not placed, operate to transfer the product when it is recognized that a product is placed, and stop the operation when it is not recognized that another product is placed through the first product recognition unit until a preset time is elapsed after classification of products is completed.

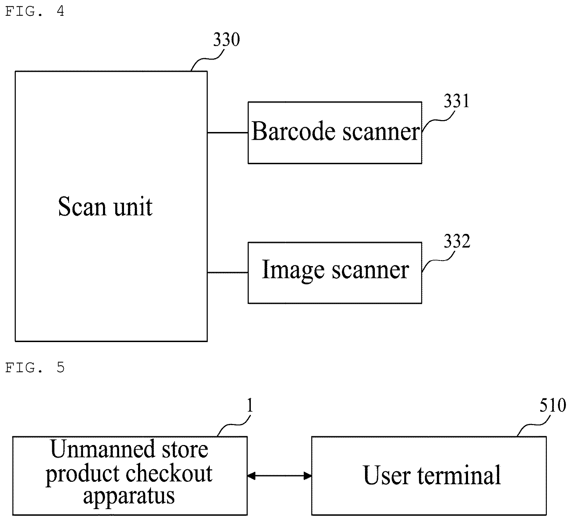

FIG. 4 is a block diagram showing the configuration of a scan unit of an unmanned store product checkout apparatus according to an embodiment of the present invention.

Referring to FIG. 4, the scan unit of the unmanned store product checkout apparatus according to an embodiment of the present invention may include a barcode scanner 331 and an image scanner 332.

The barcode scanner may recognize the barcode of a product.

The image scanner may acquire image information by scanning the image of a product.

When a barcode is recognized, the processor identifies the product as a scanned product corresponding to the identification information included in the barcode, and when the barcode is not recognized, the processor may acquire a product name and a character string from the image information, and identify the product as a scanned product on the basis of the image information, the product name, and the character string using artificial intelligence learning data.

In addition, the processor may compare the weight of the product measured using the weight sensor with weight information included in the product information corresponding to the scanned product, transmit a first signal indicating that the product has been normally identified to the control unit when the product is verified as a scanned product as a result of the comparison, and transmit a second signal indicating that the product has not been normally identified to the control unit when the product is not verified as a scanned product or it is verified that the product is not a scanned product as a result of the comparison.

At this point, when the first signal is received from the processor, the control unit may control the product classification unit not to operate while the product is transferred to the first area through the transfer unit, and when the second signal is received from the processor, the control unit may control the transfer unit to stop after recognizing that the product has arrived at the second point through the second product recognition unit, and control the operation of the product classification unit to push the product to get out of the transfer unit so that the product may be classified into the second area.

As an optional embodiment, the unmanned store product checkout apparatus may include a third product recognition unit installed at a third point, where products enter the first area, to recognize products classified to be sent to the first area.

Specifically, the third product recognition unit may recognize products moving into the first area, and count the number of products moved into the first area.

At this point, the unmanned store product checkout apparatus compares, through the processor, the number of times of transmitting the first signal to send products to the first area with the number of products counted through the third product recognition unit, and when there is a difference as a result of the comparison, it may generate a list of products classified to be sent to the first area, and transmit the list to the manager terminal.

Here, the manager may confirm the list through the manager terminal, and confirm whether the products included in the list are classified incorrectly.

Through this, when a product verified as a scanned product is incorrectly classified into the second area, this problem can be resolved through the confirmation procedure.

FIG. 5 is a block diagram showing entities for product checkout in an unmanned store according to an embodiment of the present invention.

Referring to FIG. 5, the entities for product checkout in an unmanned store according to an embodiment of the present invention include the unmanned store product checkout apparatus 1 and a user terminal 510.

The unmanned store product checkout apparatus 1 may refer to an apparatus that receives user information from the user terminal 510, recognizes products scanned by the scan unit as products purchased by the user using the user terminal, and calculates the total price.

The unmanned store product checkout apparatus 1 may be an apparatus that provides the calculated total price to the user terminal 510.

The user terminal 510 may be a device that provides user information to the unmanned store product checkout apparatus 1.

The user terminal 510 may be a device that receives the total price from the unmanned store product checkout apparatus 1.

The unmanned store product checkout apparatus 1 and the user terminal 510 may be interconnected through a communication network.

The communication network refers to a connection path for transmitting and receiving data between the entities. For example, the communication network may encompass wired networks such as Local Area Network (LAN), Wide Area Network (WAN), Metropolitan Area Network (MAN), Integrated Service Digital Network (ISDN), and the like, and wireless networks such as wireless LAN, CDMA, Bluetooth, satellite communication, and the like. However, the scope of communication networks that can be applied to the present invention is not limited thereto.

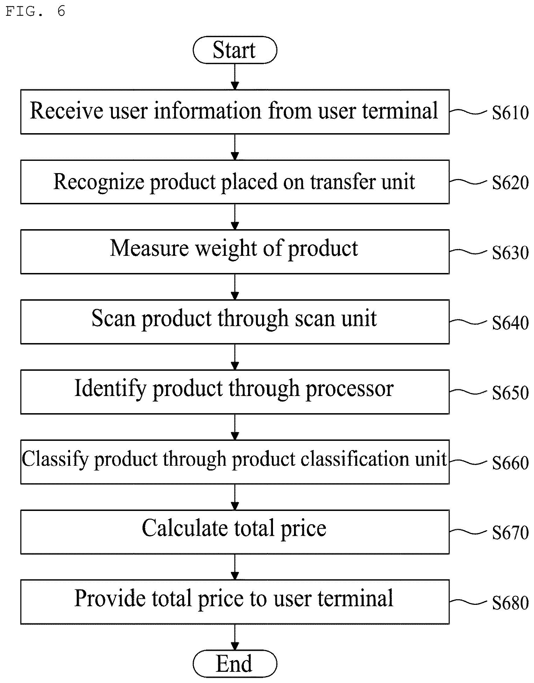

FIG. 6 is a flowchart illustrating an unmanned store product checkout method according to another embodiment of the present invention.

Referring to FIG. 6, in the unmanned store product checkout method according to an embodiment of the present invention, first, user information may be received from the user terminal (S610).

Next, a product placed on the transfer unit may be recognized through the first product recognition unit (S620).

Next, when the product is recognized, the weight of the product may be measured using the weight sensor (S630).

Next, the product transferred by the transfer unit may be scanned through the scan unit (S640).

At this point, the products placed on the transfer unit including the guide devices installed at preset intervals may be scanned for each of the guide devices.

In addition, when the barcode of the product is recognized, the barcode is scanned to acquire scanned product information corresponding to the barcode, and when the barcode of the product is not recognized, the entire image of the product may be scanned to acquire image information.

In addition, when the barcode of the product is not recognized or the image information of the product is not acquired, the product may be specified as an unconfirmed product.

Next, the product may be identified through the processor on the basis of the result of scanning the product and the weight of the product (S650).

Next, the product may be classified into the first area or the second area according to a result of the identification (S660).

Next, a first price may be calculated by adding up the prices of the products through the calculation unit (S670).

Next, the first price may be provided to the user terminal (S680).

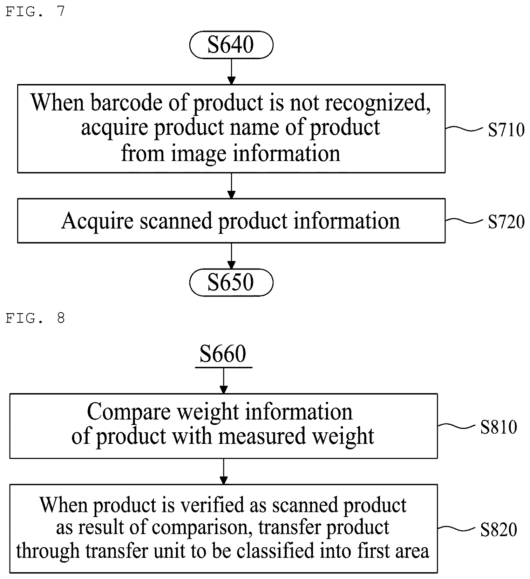

FIG. 7 is a flowchart illustrating an unmanned store product checkout method according to an embodiment of the present invention.

Referring to FIG. 7, in the unmanned store product checkout method according to an embodiment of the present invention, when the barcode of the product is not recognized after the step of scanning the product, the product name of the product may be acquired from the image information (S710).

Next, scanned product information corresponding to the product, of which the image information is acquired, may be acquired on the basis of the image information and the product name using artificial intelligence learning data (S720).

Here, the artificial intelligence learning data may include data obtained by learning the size, shape, name, and weight of products sold in an unmanned store.

FIG. 8 is a flowchart illustrating an unmanned store product checkout method according to an embodiment of the present invention.

Referring to FIG. 8, in the unmanned store product checkout method according to an embodiment of the present invention, first, weight information of the scanned product included in the scanned product information may be compared with the measured weight of the product (S810).

Next, when the product is verified as the scanned product as a result of the comparison, the product may be transferred through the transfer unit to be classified into the first area (S820).

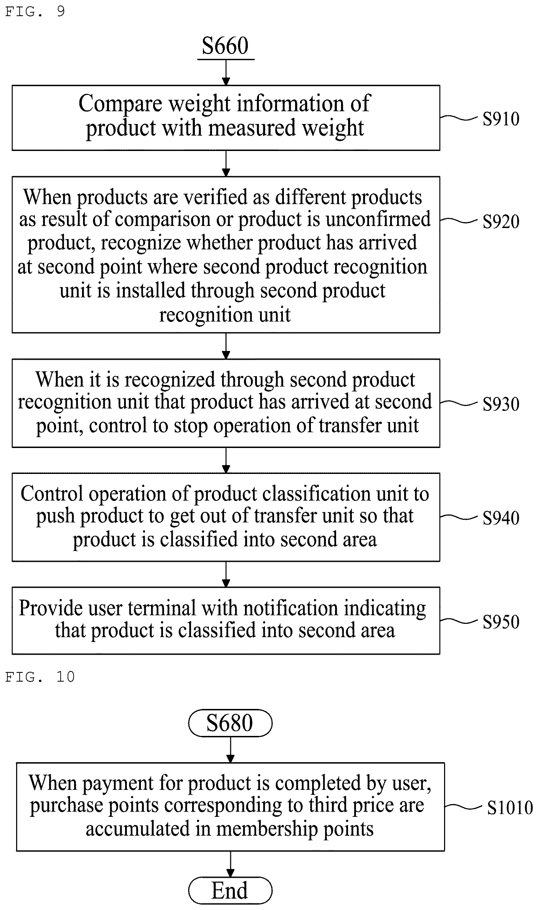

FIG. 9 is a flowchart illustrating an unmanned store product checkout method according to an embodiment of the present invention.

Referring to FIG. 9, in the unmanned store product checkout method according to an embodiment of the present invention, first, weight information of the scanned product included in the scanned product information may be compared with a measured weight of the product.

Next, when the product is verified as a different product as a result of the comparison or when the product is an unconfirmed product, it can be recognized through the second product recognition unit whether the product has arrived at the second point where the second product recognition unit is installed (S920).

Next, when it is recognized through the second product recognition unit that the product has arrived at the second point, the operation of the transfer unit may be controlled to stop (S930).

Next, the operation of the product classification unit may be controlled to push the product to get out of the transfer unit so that the product may be classified into the second area (S940).

Next, a notification indicating that the product has been classified into the second area may be provided to the user terminal (S950).

FIG. 10 is a flowchart illustrating an unmanned store product checkout method according to an embodiment of the present invention.

Referring to FIG. 10, in the unmanned store product checkout method according to an embodiment of the present invention, membership information of the user generated using the user information can be received at step S610.

Then, when payment for the products is completed by the user after the step of providing the first price, purchase points corresponding to the first price may be accumulated in the membership points included in the membership information (S1010).

At this point, at step S1010, additional purchase points may be granted at a preset first ratio corresponding to the ratio of the number of products purchased by the user to the number of products of which the barcode is recognized through the scan unit.

In addition, at step S680, the user terminal may be provided with a second price obtained by applying a preset discount rate of a second ratio, corresponding to the section where the membership points are included, to the first price.

As an optional embodiment, before step S680, a first product list of the products classified into the first area at once and a second product list of the products classified into the second area once or more may be generated, and the generated first product list and second product list may be provided to the user terminal.

Specifically, the unmanned store product checkout apparatus may first generate a first product list of the products classified into the first area at once.

At this point, a preset first or second mark may be displayed next to each product name included in the first product list.

Here, the preset first mark may mean that it is verified that scanned product information is acquired by scanning the barcode using the barcode scanner, and the acquired scanned product information matches the product information.

In addition, the preset second mark may mean that it is verified that image information of the product is acquired through the image scanner, scanned product information is acquired based on the image information, and the acquired scanned product information matches the product information.

Next, the unmanned store product checkout apparatus may generate the second product list of the products classified into the second area once or more.

At this point, a preset third mark may be displayed next to each product name included in the second product list.

Here, the preset third mark may mean that the product is an unconfirmed product, or the product is a product classified into the second rea once or more as it is verified as a product different from the scanned product information.

As an optional embodiment, when the total price is provided to the user terminal at step S680, the first product list and the second product list may also be provided to the user terminal.

At this point, the first product list and the second product list may include the prices of products in the list.

Through this, the user may confirm products of which the barcode is scanned using the barcode scanner. In addition, the higher the ratio of the products of which the barcode is scanned, the higher the membership points, and as the higher the membership points, the higher the discount rate, users are encouraged to place products on the transfer unit so that the barcodes may be scanned well. Accordingly, when the number of products of which the barcode is scanned increases, the products classified into the second area and need to be scanned again decrease, and thus there is an effect of reducing the time required for product checkout.

The specific implementations described in the present invention are only exemplary embodiments and do not limit the scope of the present invention in any way. For the sake of brevity of the specification, descriptions of conventional electronic components, control systems, software, and other functional aspects of the systems may be omitted. In addition, connection of lines between the components shown in the drawings or connecting members exemplarily show functional connections and/or physical or circuit connections, and may be represented as various functional connections, physical connections, or circuit connections that can be replaced or added in an actual device. In addition, unless specifically mentioned as "essential", "important", or the like, a component may not be absolutely necessary for the application of the present invention.

Accordingly, the spirit of the present invention should not be limited to the embodiments described above, and all scopes equivalent to the scope of the patent claims or equivalently modified therefrom, as well as the scope of the patent claims described below, are considered to fall within the scope of the spirit of the present invention.

### INDUSTRIAL APPLICABILITY

According to the method and apparatus for product checkout in an unmanned store according to the embodiments of the present invention, as product checkout can be performed quickly and accurately by increasing the product recognition rate through artificial intelligence learning data, and the location where a user places a product can be guided through a transfer unit having product feed guide devices installed at regular intervals, there is industrial applicability.

## Claims

1. An unmanned store product checkout apparatus comprising:
a transfer unit including a guide device that guides feed of products by a user, to transfer a product to scan the product desired by a user to purchase;
a first product recognition unit installed at a first point where transfer of the product begins by the transfer unit, to recognize that the product is placed on the transfer unit;
a weight sensor installed at a lower one side of the transfer unit, to measure a weight of the product;
a scan unit installed to be spaced apart from the transfer unit as much as a preset distance, to scan a barcode and an image of the product transferred by the transfer unit;
a processor for identifying what the product is by using artificial intelligence learning data on the basis of the barcode and image of the product scanned by the scan unit and the weight of the product measured through the weight sensor;
a second product recognition unit installed at a second point where scan of the product by the scan unit is terminated, to recognize that the product has arrived at the second point;
a product classification unit installed at the second point, to classify the product on the basis of a result of the product identification;
a calculation unit for calculating a total price of the products;
a display unit for providing the user with the total price and a product list; and
a control unit for controlling operations of the transfer unit and the product classification unit on the basis of a result of first product recognition performed by the first product recognition unit, a result of second product recognition performed by the second product recognition unit, and a result of product identification performed by the processor.

2. The apparatus according to claim 1, wherein the guide device is installed in the transfer unit at preset intervals to guide the user to feed products at preset intervals, the preset interval is smaller than or equal to a scan range for scanning the barcode and image of the product through the scan unit, and the scan unit scans the products fed through the guide device.

3. The apparatus according to claim 2, wherein the scan unit includes:
a barcode scanner for recognizing the barcode of the product; and
an image scanner for acquiring image information by scanning the image of the product.

4. The apparatus according to claim 3, wherein the processor identifies the product as a scanned product corresponding to identification information included in the barcode when the barcode is recognized, acquires a product name and a character string from the image information and identifies the product as a scanned product on the basis of the image information, the product name, and the character string using artificial intelligence learning data when the barcode is not recognized, compares the weight of the product measured using the weight sensor with weight information included in product information corresponding to the scanned product, transmits a first signal indicating that the product has been normally identified to the control unit when the product is verified as a scanned product as a result of the comparison, and transmits a second signal indicating that the product has not been normally identified to the control unit when the product is not verified as a scanned product or it is verified that the product is not a scanned product as a result of the comparison.

5. The apparatus according to claim 4, wherein the control unit controls the product classification unit not to operate while the product is transferred to the first area through the transfer unit when the first signal is received from the processor, and controls the transfer unit to stop after recognizing that the product has arrived at the second point through the second product recognition unit and controls the operation of the product classification unit to push the product to get out of the transfer unit so that the product may be classified into the second area when the second signal is received from the processor.

6. An unmanned store product checkout method comprising the steps of:
receiving user information from a user terminal;
recognizing a product placed on a transfer unit through a first product recognition unit;
measuring a weight of the product using a weight sensor when the product is recognized;
scanning the product transferred by the transfer unit through a scan unit;
identifying the product through a processor on the basis of a result of scanning the product and the weight of the product;
classifying the product into a first area or a second area according to a result of the identification;
calculating a first price by adding up prices of the products through a calculation unit; and
providing the first price to the user terminal.

7. The method according to claim 6, wherein the step of scanning the product includes the step of scanning the products placed on the transfer unit including the guide devices installed at preset intervals, for each of the guide devices, wherein
the step of scanning the product includes the steps of:
scanning a barcode and acquiring scanned product information corresponding to the barcode when the barcode of the product is recognized, and acquiring image information by scanning an entire image of the product when the barcode of the product is not recognized, specifying the product as an unconfirmed product when the barcode of the product is not recognized or the image information of the product is not acquired, and acquiring a product name of the product from the image information when the barcode of the product is not recognized after the step of scanning the product; and
acquiring scanned product information corresponding to the product, of which the image information is acquired, on the basis of the image information and the product name using artificial intelligence learning data, wherein
the artificial intelligence learning data includes data obtained by learning a size, a shape, a name, and a weight of products sold in an unmanned store.

8. The method according to claim 7, wherein the step of classifying the product includes the steps of:
comparing weight information of a scanned product included in the scanned product information with a measured weight of the product; and
transferring the product through the transfer unit to be classified into the first area when the product is verified as the scanned product as a result of the comparison.

9. The method according to claim 7, wherein the step of classifying the product includes the steps of:
comparing weight information of a scanned product included in the scanned product information with a measured weight of the product;
recognizing through the second product recognition unit whether the product has arrived at a second point where the second product recognition unit is installed, when the product is verified as a different product as a result of the comparison or when the product is an unconfirmed product;
controlling the transfer unit to stop the operation when it is recognized through the second product recognition unit that the product has arrived at the second point;
controlling the operation of the product classification unit to push the product to get out of the transfer unit so that the product may be classified into the second area; and
providing a notification indicating that the product has been classified into the second area to the user terminal.

10. The method according to claim 8, wherein the step of receiving user information includes the step of receiving membership information of the user generated using the user information, and
the product checkout method further comprises, after the step of providing the first price, the step of accumulating purchase points corresponding to the first price in membership points included in the membership information when payment for the products is completed by the user, wherein
the step of accumulating purchase points includes the step of granting additional purchase points at a preset first ratio corresponding to a ratio of the number of products purchased by the user to the number of products of which the barcode is recognized through the scan unit, and
the step of providing the first price includes the step of providing the user terminal with a second price obtained by applying a preset discount rate of a second ratio, corresponding to a section where the membership points are included, to the first price.
